# EUROPÄISCHE PATENTSCHRIFT

(11) **EP 0 842 522 B1**
(45) Veröffentlichungstag und Bekanntmachung des Hinweises auf die Patenterteilung: **11.08.1999**
(21) Anmeldenummer: 96928382.9
(22) Anmeldetag: 26.07.1996
(51) Int. Cl.: H01H 33/56, G01N 27/64

(54) **VERFAHREN ZUR ÜBERWACHUNG DES QUALITÄTSZUSTANDES DES FÜLLGASES SCHWEFELHEXAFLUORID IN GASGEFÜLLTEN ANLAGEN**
METHOD OF MONITORING THE QUALITY OF FILLER GASES, IN PARTICULAR SULPHUR HEXAFLUORIDE, IN GAS-FILLED INSTALLATIONS
PROCEDE DE SURVEILLANCE DE LA QUALITE DU GAZ DE REMPLISSAGE HEXAFLUORURE DE SOUFRE DANS DES INSTALLATIONS REMPLIES DE GAZ

(30) Priorität: 02.08.1995 DE 19528290
(43) Veröffentlichungstag der Anmeldung: 20.05.1998
(73) Patentinhaber: GESELLSCHAFT ZUR FÖRDERUNG DER SPEKTROCHEMIE UND ANGEWANDTEN SPEKTROSKOPIE E.V., 44139 Dortmund (DE); Laboratorio Central - Lac Convenio Copel e UFPR, 80510-030-Curitiba, Parana (BR)
(72) Erfinder: BAUMBACH, Jörg, Ingo, D-59494 Soest (DE); KLOCKOW, Dieter, D-44267 Dortmund (DE); KURRAT, Michael, D-59423 Unna (DE); SOPPART, Oliver, D-58135 Hagen (DE); ALBERTI SEGUNDO, Sandra Mara Apartamento 6, 80430-140-Curitiba, Parana (BR)
(74) Vertreter: Patentanwälte Meinke, Dabringhaus und Partner
(86) Internationale Anmeldenummer: EP9603309
(87) Internationale Veröffentlichungsnummer: WO9705635

(56) Entgegenhaltungen:
- DE-C- 4 130 810
- FR-A- 2 414 811
- US-A- 3 211 996
- US-A- 4 633 082
- JOURNAL OF CHEMICAL PHYSICS, 15 JULY 1970, USA, Bd. 53, Nr. 2, ISSN 0021-9606, Seiten 696-704, XP000610732 PATTERSON P L: "Mobilities of negative ions in SF/sub 6/" in der Anmeldung erwähnt
- JOURNAL OF CHEMICAL PHYSICS, 15 JUNE 1974, USA, Bd. 60, Nr. 12, ISSN 0021-9606, Seiten 4994-4999, XP000610731 LIN S N ET AL: "Dependence of polyatomic ion mobilities on ionic sizes" in der Anmeldung erwähnt
- JOURNAL OF PHYSICS D (APPLIED PHYSICS), 14 OCT. 1985, UK, Bd. 18, Nr. 10, ISSN 0022-3727, Seiten 2017-2022, XP000611097 DE URQUIJO-CARMONA J ET AL: "Measurement of ionisation, positive ion mobilities and longitudinal diffusion coefficients in SF/sub 6/ at high E/N" in der Anmeldung erwähnt

## Beschreibung

Die Erfindung betrifft ein Verfahren zur Überwachung des Qualitätszustandes von Füllgasen, insbesondere von Schwefelhexafluorid (SF₆), in gasgefüllten Anlagen, insbesondere in gasisolierten Schaltanlagen, wie Hoch- und Mittelspannungsschaltern.

In gasisolierten Hoch- und Mittelspannungsanlagen und -behältern werden Füllgase als Isoliergas eingesetzt. Dabei wird vorzugsweise Schwefelhexafluorid (SF₆) eingesetzt, weil SF₆ eine Reihe wichtiger Eigenschaften in sich vereinigt, die seine Verwendung nahelegen, wie hohe Isolierfähigkeit, ausgezeichnete Bogenlöscheigenschaften, Ungiftigkeit, hohe thermische und chemische Stabilität, kleiner dielektrischer Verlust faktor, hohe Gasdichte und günstige Wärmeübertragungseigenschaften. Obwohl SF₆ unter normalen Bedingungen eine beständige chemische Verbindung ist, bewirken hohe thermische Belastungen und elektrische Entladungen eine Zerstörung der SF₆-Moleküle. Gasisolierte Schaltanlagen erfordern daher Maßnahmen zur Qualitätserhaltung der Isolierung. Beim Betrieb kann nicht ausgeschlossen werden, daß es ohne geeignete Gegenmaßnahmen zur Zersetzung dieses Gases kommt. Diese Zersetzung kann z.B. durch Überhitzung an einer Verbindungsstelle, Teilentladungen an fehlerhaft geerdeten Schirmelektroden oder direkte Gasdurchschläge verursacht werden. Die so gebildeten Zersetzungsprodukte sind zum Teil hochtoxisch und stark korrosiv. Darüber hinaus beeinträchtigen sie die elektrische Festigkeit des SF₆-Isoliergases in Schaltgeräten und Anlagen, die mit zunehmender Verbreitung von SF₆ gefüllten Anlagen wesentlich die Zuverlässigkeit der elektrischen Energieverteilung bestimmen.

Diese exemplarisch genannten und bekannten negativen Effekte auf das Isoliervermögen von SF₆-Gas fordert zwingend die Einhaltung eines hohen Standards bei der Fertigung von SF₆-Anlagen und eine laufende Überwachung des Qualitätszustandes des Isolatorgases. Es ist bekannt, daß es trotz des hohen Standes der Fertigungsqualität und der getroffenen Maßnahmen, wie Einbau von Molekularsieben oder Absorptionsfiltern in die Anlage, um Wasser und gasförmige Zersetzungsprodukte binden zu können, im Langzeitverhalten der Anlage zu Ausfällen kommen kann. So sind beispielsweise Teilentladungen an gasisolierten Schaltern direkt gemessen worden. Da die Bildung gasförmiger Zersetzungsprodukte die elektrische Festigkeit einer SF₆-Anlage verschlechtert, sind quantitative Angaben über die elektrische Festigkeit von SF₆-Gas mit Zersetzungsprodukten für die Energieversorger als Betreiber solcher Anlagen von großem Interesse. Gleiches gilt für Zahlenwerte über die Verringerung der Überschlagspannung von Stützisolatoren unter Einfluß von Feuchtigkeit und Zersetzungsprodukten. Diese Angaben sind für eine Gasdiagnostik, z.B. zur Bestimmung des Zeitpunktes eines Gasaustausches oder einer ereignisgesteuerten Revision als Fernziel unverzichtbar. Ein weiteres Anwendungsgebiet der Gasdiagnostik ist die Bestimmung des Fehlerortes und der Fehlerart. Der Fehlerort läßt sich aufgrund der Konzentrationsunterschiede in den einzelnen geschotteten Bereichen einer Anlage finden. Die Fehlerart kann sich aus den einzelnen Komponenten der Zersetzungsprodukte ergeben.

Quantitative Angaben über die elektrische Festigkeit von SF₆-Gas mit Beimengungen von seinen Zersetzungsprodukten liegen ausgehend von Experimenten mit Gleichspannungs-Koronaentladungen in wissenschaftlichen Einrichtungen und off-line-Probenahmen und Analysen an elektrischen Schaltanlagen vor. Hierzu kommen neben naßchemischen Verfahren Teströhrchen und die Fouriertransform-Infrarotspektroskopie sowie die Massenspektrometrie zum Einsatz. Akustische Verfahren gestatten Rückschlüsse auf den Qualitätszustand des Isoliergases, sind jedoch instrumentell und personell aufwendig, noch nicht ausreichend genau und zudem relativ teuer. Alle diese vorgenannten Verfahren sind Laborverfahren für die Gasanalytik, die sehr hohe Empfindlichkeiten und gute Selektivität aufweisen, jedoch off-line arbeiten und damit nur eine zeitversetzte Antwort zum Betriebszustand der Anlage geben können. Außerdem sind sie vergleichsweise personal- und kostenintensiv. Ein solches Vefahren mit den Merkmalen des Oberbegriffes des Patentanspruches 1 ist z.B. aus US-A-4,633,082 bekannt. Bei diesem off-line-Verfahren wird ein Ionenmassenspektrometer verwendet.

Aufgabe der Erfindung ist es deshalb, eine Überwachung des Qualitätszustandes von Füllgasen in gasgefüllten Anlagen zu ermöglichen, wobei gleichzeitig auch eine etwaige Bestimmung des Fehlerortes und der Fehlerart in einer solchen Anlage möglich sein soll.

Diese Aufgabe wird mit einem Verfahren der eingangs bezeichneten Art erfindungsgemäß dadurch gelöst, daß das Füllgas der Anlage zumindest für die Zeit der Analyse im kontinuierlichen Gasaustausch mit einem Ionenbeweglichkeitsspektrometer steht, in welchem das Füllgas ionisiert wird und diese Ionen anschließend in einem Driftkanal des Ionenbeweglichkeitsspektrometers analysiert werden.

Ionenbeweglichkeitsspektrometer sind grundsätzlich seit längerer Zeit für andere Verwendungszwecke bekannt. So sind seit einer Reihe von Jahren verschiedene derartige Geräte für den militärischen und zivilen Einsatz konzipiert und gebaut worden. Heute werden vor allem Ionenbeweglichkeitsspektrometer als Warngeräte für chemische Kampfstoffe und dgl. verwendet. In verschiedenen wissenschaftlichen Arbeiten sind auch schon die Beweglichkeiten verschiedener negativer und positiver Ionen, die grundsätzlich in SF₆ gebildet werden können, bei unterschiedlichen Temperaturen und Drücken beschrieben worden. Hierbei sind jedoch entweder die Drücke nicht mit den Betriebsdrücken von Hochspannungsschaltern vergleichbar (P.L. Petersson, Mobilities of negative ions in SF₆-J.Chem.Phys. 53 (1970) 696-704), die Temperaturen deutlich höher als in solchen SF₆-gefüllten Anlagen (S.N. Lin, G.W. Griffin, E.C. Horning, W.E. Wentworth: Dependence of polyatomic ion mobilities on ionic size - J.Chem.Phys. 12 (1974), 94494-94999) oder die elektrischen Feldstärken stimmen nicht mit denjenigen in Ionenbeweglichkeitsspektrometern überein (J.de Urquijo-Carmona, C. Cisneros, I. Alvarez. Measurement of ionisation, positive ion mobilities and longitudinal diffusion coefficients in SF₆ at high E/N. - J. Phys. D: Appl. Phys. 18 (1985) 92017-2022).

Es hat sich nun überraschend herausgestellt, daß es mit der erfindungsgemäßen Verfahrensführung möglich ist, im großtechnischen Einsatz eine kontinuierliche und zuverlässige Überwachung des Qualitätszustandes von vorzugsweise SF₆-gefüllten Anlagen durchzuführen. Dabei ist die Ionenbeweglichkeitspektrometrie eine Methode, bei Umgebungsdruck durch direkte Ionisierung oder über Ionen-Molekül-Reaktionen Ionen bereitzustellen und diese danach im Driftkanal zu analysieren. Die Zeit, die diese Ionen benötigen, um unter den Einfluß eines elektrischen Feldes eine bestimmte Strecke im Driftkanal zurückzulegen, ist hauptsächlich eine Funktion der Masse und der Ladung der Ionen. Darüber hinaus spielen auch die Ladungsverteilung im Molekül und die Polarisierbarkeit eine Rolle.

Dabei kann an gasgefüllten Schaltanlagen auch von außen im Bypass eine ständige oder zeitweise Adaption eines Ionenbeweglichkeitsspektrometers so erfolgen, daß bis hinunter in den Millisekundenbereich Spektren der zu untersuchenden Gemische aufgenommen und anschließend in geeigneter Weise ausgewertet werden können. Hierbei wird ein auftretender Unterschied zwischen dem Spektrum in reinem SF₆, praktischerweise dem beim Befüllen der Anlage im Mittel erhaltenen Spektrum, mit dem aktuellen Spektrum genutzt. Dabei können in dem Spektrum einzelne Ionen als Leitkomponenten ausgesucht werden. Wenn es im Laufe des Betriebes der gasgefüllten Anlage zu Veränderungen der Qualität des Füllgases kommt, so wird sich das Ionenbeweglichkeitsspektrum verändern. Zusätzliche Peaks können auftreten, je nach Natur des Füllgases, seiner Qualität, seinem Fülldruck, seinem Wassergehalt, seinem Sauerstoffgehalt und anderer Parameter oder es kommt zu einer Verschiebung der Peaklage. Der Verlauf der Veränderungen kann computergestützt überwacht und ausgewertet werden. Es kann dementsprechend auch die Güte von gereinigtem SF₆ bei der Wiederbefüllung SF₆-gefüllter Anlagen überprüft bzw. überwacht werden.

Vorteilhafterweise wird die jeweils ermittelte Füllgaszusammensetzung mit einer Referenzgaszusammensetzung verglichen und bei Überschreitung einer vorgegebenen Abweichung von der Referenzgaszusammensetzung ein Fehlersignal erzeugt, um die Revisionsbedürftigkeit zu signalisieren und die Gefahr des Ausfallens der Anlage anzuzeigen. Als Referenzgas dient dann selbstverständlich reines SF₆.

Im Ionisierungsraum des Ionenbeweglichkeitsspektrometers kann die primäre Ionisierung der Gasmoleküle des Füllgases durch β-Strahlung, UV-Strahlung oder durch elektrische Teilentladungen erfolgen, wobei letzteres besonders vorteilhaft ist.

In weiterer vorteilhafter Ausgestaltung ist vorgesehen, daß bei der Ionisierung mittels elektrischer Teilentladungen durch eine Folge elektrischer Impulse die Anzahl und die Dauer der Teilentladungen so gesteuert wird, daß der Startimpuls für einen Ionenschwarm direkt mit dem Impuls der Teilentladungen zusammenfällt. Außerdem kann die Ladungsträgeranzahl gesteuert werden, wobei vorzugsweise oder gezielt Ionisierungsergebnisse erreicht werden, wie mittels radioaktiver Strahlungsquellen.

Als besonders vorteilhaft hat es sich herausgestellt, daß im Driftraum des Ionenbeweglichkeitsspektrometers ein konstantes elektrisches Feld mit einer Feldstärke zwischen einigen 10 und einigen 100 bis einigen 1000 V/cm eingestellt wird.

Um die kontinuierliche Überwachung zu gewährleisten, kann vorgesehen sein, daß das Ionenbeweglichkeitsspektrometer in den gasgefüllten Bereich der Anlage eingebettet ist oder über eine Gasleitung mit dem Füllgas in kontinuierlichem Austausch (mittels Gasfluß und/oder Gasdiffusion) steht. Ein solcher Gasaustausch sollte auch bei einem off-line und/oder on-side-Betrieb z.B. bei diskontinuierlichen Überwachungen bestehen oder hergestellt werden.

Besonders vorteilhaft ist vorgesehen, daß eine stabförmige Ionisierungsquelle im Ionisierungsraum und eine plattenförmige Sammelelektrode am Ende des Driftraumes (Spitze-Platte-Anordnung) eingesetzt werden. Auf diese Weise können die Ionen mittels einer Teilentladung direkt im Reaktionsraum im Trägergas SF₆ bereitgestellt werden, wobei ein ständiger Gasaustausch zwischen dem Füllgas der Anlage und dem Ionenbeweglichkeitsspektrometer so herzustellen ist, daß eine kontinuierliche Messung zumindest für die Zeit der Analyse möglich ist.

Als besonders vorteilhaft hat es sich herausgestellt, daß ein als zylindrisches Rohr ausgebildeter Driftraum eingesetzt wird, wobei der Driftraum vorteilhaft von einer Mehrzahl von leitfähigen Elektrodenringen gebildet wird, welche durch isolierende Zwischenringe getrennt sind. Eine solche Elektrodenanordnung ist grundsätzlich beispielsweise aus DE 41 30 810 C1 bekannt.

Die Erfindung ist nachstehend anhand der Zeichnung beispielsweise näher erläutert. Diese zeigt in:
- Fig. 1: in einer Prinzipskizze einen mit einem Ionenbeweglichkeitsspektrometer ausgerüsteten gasisolierten Hochspannungsschalter und in
- Fig. 2: in einem Schaubild einen Vergleich der Ionenbeweglichkeitsspektren für negative Ionen in Schwefelhexafluorid für reines SF₆ für eine Probe aus einer realen Schaltanlage und für laborgealtertes Gas.

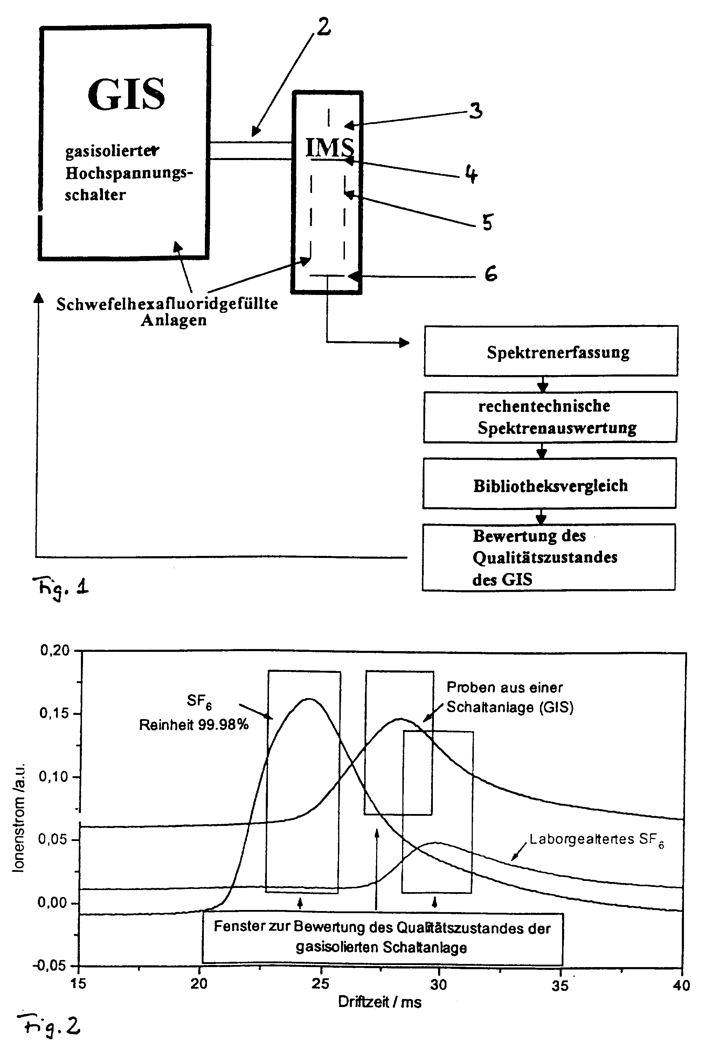

In Fig. 1 ist ein gasisolierter Hochspannungsschalter vereinfacht dargestellt und mit GIS bezeichnet. Dieser Hochspannungsschalter GIS ist über eine geeignete, mit 2 bezeichnete Verbindung zum Gasaustausch mit einem Ionenbeweglichkeitsspektrometer IMS verbunden. Dieses Ionenbeweglichkeitsspektrometer IMS weist eine stabförmige Ionisierungsquelle 3 auf, welche im Ionisierungsraum angeordnet ist, der am anderen Ende von einem Schaltgitter 4 zur Ionenschwarmbildung begrenzt ist. Zwischen Ionisierungsquelle 3 und Schaltgitter 4 kann ein weiteres, nicht dargestelltes Gitter angeordnet sein. Anschließend an das Schaltgitter 4 ist eine Driftröhre 5 vorgesehen, welche vorzugsweise rohrförmig ist und aus einer Mehrzahl von leitfähigen Elektrodenringen gebildet ist, welche jeweils durch isolierende Zwischenringe getrennt sind. Am anderen Ende der Driftröhre 5 ist als Sammelelektrode eine Faradayplatte 6 angeordnet.

Um entlang der Achse der Mehrzahl der leitfähigen Elektrodenringe ein gleichförmiges Driftfeld geeigneter Stärke zu etablieren, können die leitenden Elektrodenringe auf ein geeignetes Potential gelegt werden. Dieses Potential wird mittels einer Hochspannungsquelle erzeugt und in der Regel mittels einer geeigneten Widerstandskette oder eines Widerstandsnetzwerkes eingerichtet. Die Stärke des elektrischen Feldes liegt in der Größenordnung einiger 100 V/cm entlang des Driftweg.

Die elektrische Feldstärke im Ionisierungsraum muß mit der im Driftraum nicht notwendigerweise übereinstimmen. Vor der Faradayplatte 6 (der Sammlungselektrode) ist ein Aperturgitter angeordnet, das in der Zeichnung nicht dargestellt ist.

Üblicherweise wird das Trägergas mit den Probenmolekülen, hier Zersetzungsprodukten im Trägergas SF₆ in den Ionisierungsraum des Ionenbeweglichkeitsspektrometers IMS geführt. Dies kann über die geeignete Verbindung 2 durch kontinuierlichen Gasaustausch mit der SF₆-gefüllten Anlage GIS mittels Gastransport (z.B. Gasfluß oder Gasdiffusion) erfolgen.

Im Ionisierungsraum des Ionenbeweglichkeitsspektrometers IMS werden mittels radioaktiver Strahlungsquellen, UV-Lichtquellen oder Koronaentladungen oder besonders bevorzugt auch mittels Teilentladungen Trägergas- und Analytgasionen (Zersetzungsprodukte) gebildet. Im Reaktionsbereich liegt in der Regel ein elektrischer Potentialgradient vor, so daß das geladene Gemisch diverser Ionen auf das Injektionsgitter hin bewegt wird. Am Ausgang des Ionisierungsraumes befindet sich das Schaltgitter 4 zur Ionenschwarmbildung, welches sich periodisch öffnet (z.B. alle 50 ms für einige 10 bis 100 µs), normalerweise den Durchlaß zur Driftzelle für Ionen jedoch versperrt. Im von außen angelegten elektrischen Feld gelangt während der Gitteröffnungszeit eine bestimmte Menge des Ionengemisches in den Driftraum 5. Im hier von außen aufrechterhaltenen, nahezu konstanten elektrischen Driftfeld mit idealerweise linearem Potentialgradienten driften die Ionen gemäß ihrer Masse und Struktur unterschiedlich schnell und treffen am Ende des Driftraumes auf das nicht dargestellte Aperturgitter und bewegen sich durch dieses hindurch zu der Sammelelektrode (Faradayplatte 6) hin. Im günstigen Fall treffen vollständig getrennte Teilwolken der Ionen auf die Faradayplatte 6, wo ein Ionenbeweglichkeitsspektrum mittels geeigneter Verstärker und Anzeigeinstrumente erhalten werden kann. Hierbei wird ausgenutzt, daß die Ankunftszeit der Ionen von ihrer Mobilität abhängt. Somit erreichen leichtere Ionen die Faradayplatte 6 früher als schwerere.

Die Möglichkeit einer on-line-Überwachung der Qualität des SF₆-Gases in dem gasisolierten Hochspannungsschalter GIS, beruht zum einen darauf, daß die Ionen mittels einer Teilentladung vorzugsweise mittels der in der Fig. 1 dargestellten Spitze-Platte-Anordnung, direkt im Reaktionsraum im Trägergas SF₆ bereitgestellt werden können und zum anderen darauf, daß ein ständiger Gasaustausch zwischen dem Füllgas des Hochspannungsschalters GIS und dem Ionenbeweglichkeitsspektrometer IMS so hergestellt wird, daß eine kontinuierliche Messung möglich ist. Hierbei wird der Unterschied zwischen dem Spektrum in reinem SF₆, praktischerweise dem beim Befüllen der Anlage im Mittel erhaltenen, und dem aktuellen Spektrum ausgewertet. Dazu können in dem Spektrum beispielsweise einzelne Ionen als Leitkomponenten ausgesucht werden. Wenn es im Laufe des Betriebes der gasgefüllten Anlage zu Veränderungen der Qualität des Füllgases kommt, so ändert sich das Ionenbeweglichkeitsspektrum. Zusätzliche Peaks können auftreten, je nach Natur des Füllgases, seiner Qualität, seinem Fülldruck, seinem Wassergehalt, seinem Sauerstoffgehalt und anderer Parameter. Oder die Peaklage kann sich verändern. Der Verlauf der Veränderungen wird dann computergestützt überwacht und ausgewertet. Bei Abweichung über einen für die entsprechende Anlage festgelegten Grenzwert hinaus wird die Revisionsbedürftigkeit signalisiert und die Gefahr des Ausfalls der Anlage bzw. des Schalters GIS angezeigt und ggf. Alarm ausgelöst.

In Fig. 2 sind typische Spektren, die in der Praxis aufgenommen worden sind, dargestellt, nämlich zum einen eine Kurve für reines SF₆ (Reinheit 99,98 %), eine Probe aus einem realen gasisolierten Hochspannungsschalter GIS und eine Probe für laborgealtertes und damit sehr geschädigtes SF₆. Erkennbar ergeben sich deutliche Unterschiede, insbesondere eine Verschiebung des Peakmaximums, die eine Auswertung der jeweiligen Qualität des SF₆-Gases ermöglichen.

Natürlich ist das erfindungsgemäße Verfahren nicht nur zur Überwachung des Qualitätszustandes von SF₆, sondern auch von anderen Gasen geeignet.

## Patentansprüche

1. Verfahren zur Überwachung des Qualitätszustandes von Füllgasen, insbesondere von Schwefelhexafluorid (SF₆) in gasgefüllten Anlagen, insbesondere in gasisolierten Schaltanlagen, wie Hoch- und Mittelspannungsschaltern (GIS),
dadurch gekennzeichnet,
daß das Füllgas der Anlage zumindest für die Zeit der Analyse im kontinuierlichen Gasaustausch mit einem Ionenbeweglichkeitsspektrometer (IMS) steht, in welchem das Füllgas ionisiert wird und diese Ionen anschließend in einem Driftkanal (5) des Ionenbeweglichkeitsspektrometers (IMS) analysiert werden.

2. Verfahren nach Anspruch 1,
dadurch gekennzeichnet,
daß die jeweils ermittelte Füllgaszusammensetzung mit einer Referenzgaszusammensetzung verglichen und bei Überschreitung einer vorgegebenen Abweichung von der Referenzgaszusammensetzung ein Fehlersignal erzeugt wird.

3. Verfahren nach Anspruch 1 oder 2,
dadurch gekennzeichnet,
daß im Ionisierungsraum des Ionenbeweglichkeitsspektrometers (IMS) die primäre Ionisierung der Gasmoleküle des Füllgases durch β-Strahlung, UV-Strahlung oder durch elektrische Teilentladungen erfolgt.

4. Verfahren nach Anspruch 3,
dadurch gekennzeichnet,
daß bei der Ionisierung mittels elektrischer Teilentladungen durch eine Folge elektrischer Impulse die Anzahl und die Dauer der Teilentladungen so gesteuert wird, daß der Startimpuls für einen Ionenschwarm direkt mit dem Impuls der Teilentladungen zusammenfällt.

5. Verfahren nach einem oder mehreren der vorangehenden Ansprüche,
dadurch gekennzeichnet,
daß im Driftraum (5) des Ionenbeweglichkeitsspektrometers (IMS) ein konstantes elektrisches Feld mit einer Feldstärke zwischen einigen 10 und einigen 100 bis einigen 1000 V/cm eingestellt wird.

6. Verfahren nach einem oder mehreren der vorangehenden Ansprüche,
dadurch gekennzeichnet,
daß das Ionenbeweglichkeitsspektrometer (IMS) in den gasgefüllten Bereich der Anlage eingebettet ist oder über eine Gasleitung (2) mit dem Füllgas in kontinuierlichem Austausch steht.

7. Verfahren nach einem oder mehreren der vorangehenden Ansprüche,
dadurch gekennzeichnet,
daß eine stabförmige Ionisierungsquelle (3) im Ionisierungsraum und eine plattenförmige Sammelelektrode (6) am Ende des Driftraumes (5) (Spitze-Platte-Anordnung) eingesetzt werden.

8. Verfahren nach Anspruch 7,
dadurch gekennzeichnet,
daß ein als zylindrisches Rohr ausgebildeter Driftraum (5) eingesetzt wird.

9. Verfahren nach Anspruch 8,
dadurch gekennzeichnet,
daß der Driftraum (5) von einer Mehrzahl von leitfähigen Elektrodenringen gebildet wird, welche durch isolierende Zwischenringe getrennt sind.

## Revendications

1. Procédé de surveillance de la qualité de gaz de remplissage, en particulier d'hexafluorure de soufre (SF₆) dans des installations remplies de gaz, en particulier dans installations de distribution d'électricité isolées par un gaz, comme des interrupteurs haute et moyenne tension (GIS), caractérisé en ce que le gaz de remplissage de l'installation se trouve, au moins pendant la durée de l'analyse, en échange gazeux continu avec un spectromètre de mobilité ionique (IMS) dans lequel le gaz de remplissage est ionisé, et ces ions sont ensuite analysés dans un canal de dérive (5) du spectromètre de mobilité ionique (IMS).

2. Procédé selon la revendication 1, caractérisé en ce que la composition de gaz de remplissage obtenue est comparée à une composition de gaz de référence et un signal d'erreur est produit lorsque l'écart par rapport à la composition du gaz de référence est supérieur à une valeur prédéterminée.

3. Procédé selon la revendication 1 ou 2, caractérisé en ce que l'ionisation primaire des molécules de gaz du gaz de remplissage se produit dans la chambre d'ionisation du spectromètre de mobilité ionique (IMS) sous l'effet d'un rayonnement β, d'un rayonnement UV ou de décharges électriques partielles.

4. Procédé selon la revendication 3, caractérisé en ce que, dans le cas de l'ionisation au moyen de décharges électriques partielles par une suite d'impulsions électriques, on règle le nombre et la durée des décharges partielles de manière que l'impulsion de départ pour une grappe d'ions coïncide avec l'impulsion des décharges partielles.

5. Procédé selon l'une ou plusieurs des revendications précédentes, caractérisé en ce que, dans la zone de dérive (5) du spectromètre de mobilité ionique (IMS), on établit un champ électrique constant ayant une intensité de champ comprise entre quelques dizaines et quelques centaines à quelques milliers de V/cm.

6. Procédé selon l'une ou plusieurs des revendications précédentes, caractérisé en ce que le spectromètre de mobilité ionique (IMS) est incorporé dans la zone remplie de gaz de l'installation ou se trouve en échange continu avec le gaz de remplissage par l'intermédiaire d'une conduite de gaz (2).

7. Procédé selon l'une ou plusieurs des revendications précédentes, caractérisé en ce que l'on dispose une source d'ionisation en forme de barre (3) dans la chambre d'ionisation et un collecteur en forme de plaque (6) à l'extrémité de la zone de dérive (5) (disposition pointe-plaque).

8. Procédé selon la revendication 7, caractérisé en ce que l'on utilise une zone de dérive (5) formée d'un tube cylindrique.

9. Procédé selon la revendication 8, caractérisé en ce que la zone de dérive (5) est formée d'une multiplicité d'anneaux d'électrode séparés par des anneaux intermédiaires isolants.

## Claims

1. A method of monitoring the quality status of filling gases, in particular sulphur hexafluoride (SF₆) in gas-filled installations, in particular in gas-insulated switching installations such as high- and medium-voltage switches (GIS). characterised in that at least for the time of the analysis operation the filling gas of the installation is in continuous gas exchange with an ion mobility spectrometer (IMS) in which the filling gas is ionised and those ions are then analysed in a drift passage (5) of the ion mobility spectrometer (IMS).

2. A method according to claim 1 cnaracterised in that the respectively ascertained filling gas composition is compared to a reference gas composition and an error signal is produced when a predetermined deviation from the reference gas composition is exceeded.

3. A method according to claim 1 or claim 2 characterised in that primary ionisation of the gas molecules of the filling gas is effected in the ionisation chamber of the ion mobility spectrometer (IMS) by b-radiation, UV-radiation or by electrical corona discharges.

4. A method according to claim 3 characterised in that the number and duration of the corona discharges is so controlled upon ionisation by means of electrical corona discharges by a sequence of electrical pulses that the start pulse for an ion cluster directly coincides with the pulse of the corona discharges.

5. A method according to one or more of the preceding claims characterised in that a constant electrical field of a field strength of between some 10 and some 100 to some 1000 V/cm is set in the drift chamber of the ion mobility spectrometer (IMS).

6. A method according to one or more of the preceding claims characterised in that the ion mobility spectrometer (IMS) is embedded in the gas-filled region of the installation or is in continuous exchange with the filling gas by way of a gas line (2).

7. A method according to one or more of the preceding claims characterised in that a bar-shaped ionisation source (3) is used in the ionisation chamber and a plate-shaoed collecting electrode (6) is used at the end of the drift chamber (5) (point-plate arrangement).

8. A method according to claim 7 characterised in that a drift chamber (5) in the form of a cylindrical tube is used.

9. A method according to claim 8 characterised in that the drift chamber (5) is formed by a plurality of conductive electrode rings which are separated by insulating intermediate rings.
